# EUROPÄISCHE PATENTANMELDUNG

(11) **EP 0 924 021 A2**
(43) Veröffentlichungstag der Anmeldung: **23.06.1999**
(21) Anmeldenummer: 98123141.8
(22) Anmeldetag: 04.12.1998
(51) Int. Cl.: B23K 26/00

(54) **Verfahren zum Verbinden von Blechteilen**

(30) Priorität: 22.12.1997 DE 19757245
(71) Anmelder: EKO Stahl GmbH, 15890 Eisenhüttenstadt (DE)
(72) Erfinder: Casajus, Alvaro Dr., 15232 Frankfurt (Oder) (DE); Bräunig, Siegfried, 15890 Eisenhüttenstadt (DE)
(74) Vertreter: Wenzel, Klaus

(57) **Zusammenfassung**

Die Erfindung betrifft ein Verfahren zum Verbinden von Blechteilen im Überlappstoß, insbesondere von metallisch beschichteten Blechteilen für Kraftfahrzeugkarosserien.
Das Verfahren ist dadurch gekennzeichnet, daß zwischen einem Grundblech(1) und einem mit dem Grundblech(1) zu verbindenden Deckblech(2) ein trägerfreier Hochleistungsklebestreifen(3) einglegt wird und danach das Grundblech(1) mit dem Deckblech(2) unter Druck miteinander verklebt werden, wobei der Hochleistungsklebestreifen(3) so bemessen ist, daß seine äußere Kontur kleiner als die äußere Kontur des Deckbleches(2) ist und die so in ihrer Lage fixierten Blechteile nachfolgend durch eine in der äußeren klebestreifenfreien Zone des Deckbleches(2) verlaufende Laserschweißnaht(4) miteinander verbunden werden.
Die Dicke des verwendeten trägerfreien Hochleistungsklebestreifens(3) beim Verbinden von beschichteten Blechteilen beträgt dabei mindestens 0,2mm um ein ungehindertes Entweichen von verdampften Beschichtungsmaterial aus dem Schweißnahtbereich zu ermöglichen.

## Beschreibung

Die Erfindung betrifft ein Verfahren zum Verbinden von Blechteilen im Überlappstoß, insbesondere von metallisch beschichteten Blechteilen für Kraftfahrzeugkarosserien.

Zur Senkung des Eigengewichts von Fahrzeugen und zur Verbesserung des Korrosionsschutzes der einzelnen Bauteile werden in der Automobilindustrie vorzugsweise hochfeste, dickenreduzierte Stahlbleche mit einer metallischen Schutzschicht eingesetzt.
Hochbelastete lokale Bereiche von Fahrzeugteilen werden zur wirkungsvollen Verstärkung der dünneren Blechteile durch entsprechende Verstärkungsbleche, auch als Deckbleche bezeichnet, verstärkt.
Die einzelnen Blechteile werden dabei vorzugsweise mit einem Laserschweißverfahren miteinander verbunden. In der Regel handelt es sich um das Schweißen geschlossener Konturen,die komplizierte Haltevorrichtungen erfordern, welche die Bewegungsfreiheit eines Laserschweißkopfes beeinträchtigen.
Als Nachteil bei dem Verbinden der Teile im Überlappstoß ist das Verdampfen der metallischen Schutzschicht im Schweißnahtbereich zu nennen, was zu einer Beeinträchtigung der Schweißnahtqualität führt. Bei der Verbindung solcher Bleche im Überlappstoß sind deshalb besondere Schweißnahtvorbereitungen zu treffen, damit der beim Schweißen von verzinkten Blechen frei werdende Zinkdampf nicht durch das flüssige Schmelzbad entweicht und zu einer Poren- oder Einschlußbildung führt, die die Festigkeit der Schweißnaht bis zu ihrer Unbrauchbarkeit beeinträchtigen kann. Zur Vermeidung von derartigen Nachteilen sind bereits mehrere Lösungen bekannt.

So sind z.B. Verfahren bekannt, bei denen zum Verbinden von zwei verzinkten Blechen der Fügebereich rändelungsartig ausgebildete Oberflächenstrukturen aufweist.
Gemäß DE 39 09 471 wird mindestens ein Blech mit einer mittels spanabhebender, Kaltpreß- oder Kaltwalz- oder Prägeverfahren hergestellten Rändelung versehen.

Derartige spanabhebende Verfahren oder Umformverfahren haben erhebliche Nachteile. Insbesondere sind sie technologisch nur dann sinnvoll einzusetzen, wenn die benachbarten zu verbindenden Werkstückflächen im wesentlichen planparallel sind.

Ein weiteres Verfahren ist in der DE 44 07 190 veröffentlicht, bei dem zum Verbinden von zwei verzinkten Werkstücken imFügebereich rändelungsartig ausgebildete Oberflächenstrukturen mittels getakteten Hochleistungsslaserstrahl erzeugt werden.

Mit dieser Ausbildung des Fügebereiches soll beim Schweißvorgang durch Verdampfen von Grundwerkstoff im Schweißnahtbereich der entstehende Beschichtungsdampf durch die erzeugten Mikrokanälen entweichen und somit eine Beeinträchtigung der Schweißnahtqualität durch den Beschichtungdampf vermieden werden.

Eine weitere Lösung zum Verbinden zweier verzinkter Bleche mit einander überlappenden Randbereichen ist in der DE 196 06 341 beschrieben. Das Verfahren ist dadurch gekennzeichnet, daß die Randbereiche der Bleche sich unter Bildung eines taschenförmigen Spaltes längs einer anzubringenden Schweißnaht beinahe berühren und durch diese Ausgestaltung das Austreten von Gasen beim Schweißen verzinkter Bleche aus dem Bereich der Schweißnaht erleichtert wird.

Die genannten Verfahren erfordern einen hohen Aufwand für die Schweißnahtvorbereitung bzw. für die genaue Fixierung der Lage der Schweißnaht.
Nachteilig sind dabei insbesondere die zusätzlichen Kosten für entsprechende Vorrichtungen zur Schweißnahtvorbereitung sowie notwendiger Haltesysteme zur Positionierung der Bleche und zur Fixierung des Schweißnahtbereiches während des Schweißvorganges.

Aufgabe der Erfindung ist es, ein Verfahren zum Verbinden von Blechteilen vorzugsweise von metallisch beschichteten Blechteilen im Überlappstoß zu finden, bei dem kein zusätzlicher Aufwand zur Schweißnahtvorbereitung erforderlich ist und eine Fixierung des Schweißnahtbereiches ohne aufwendige Haltevorrichtungen möglich ist.

Erfindungsgemäß wird die Aufgabe dadurch gelöst, daß zum Verbinden von Blechteilen, insbesondere von metallisch beschichteten Blechteilen für Kraftfahrzeugkarosserien zwischen einem Grundblech und einem mit dem Grundblech zu verbindenden Deckblech ein trägefreier Hochleistungsklebestreifen eingelegt wird und danach das Grundblech mit dem Deckblech unter Druck miteinander verklebt werden, wobei der Hochleistungsklebestreifen so bemessen ist, daß seine äußere Kontur kleiner als die Kontur des Deckbleches ist und die so in ihrer Lage fixierten Blechteile nachfolgend durch eine in der äußeren klebestreifenfreien Zone des Deckbleches verlaufende vorzugsweise geschlossene Laserschweißnaht miteinander verbunden werden.

Zur Sicherung des Entweichens von verdampften Beschichtungsmaterial beträgt die Dicke des Hochleistungsklebestreifens mindestens 0,2 mm.Die Dicke des Klebstreifens kann geringer gewählt werden, wenn es sich bei den zu verbindenden Blechen um unbeschichtete Teile handelt bei denen ein Verdampfen von Beschichtungsstoffen im Schweißnahtbereich und somit ein Beeinträchtigung der Schweißnaht durch die Gasbildung ausgeschlossen werden kann.

Das erfindungsgemäße Verfahren ermöglicht eine genaue und stabile Lagefixierung des Deckbleches auf dem Grundblech während der Dauer des Schweißvorganges so das die bisher notwendigen Haltevorrichtungen während des Schweißvorganges nicht mehr erforderlich sind. Damit wird das bisher notwendige Umsetzen der Haltevorrichtungen vermieden und die problemlose Ausführung von geschlossenen Schweißnähten ermöglicht.

Die Verwendung von Hochleistungsklebestreifen mit einer definierten Dicke ermöglicht die Einstellung konstanter Verhältnisse bezüglich des Schweißspaltes und gewährleistet somit eine hohe Schweißnahtqualität.

Die Erfindung soll nachfolgend an einem Ausführungsbeispiel zum Verbinden von verzinkten Blechen im Überlappstoß näher beschrieben werden.
In der dazugehörenden Zeichnung zeigen:
- Fig.1:: Beispiel zur Verstärkung eines Grundbleches für eine Fahrzeugtür nach bisheriger Verfahrensweise
- Fig.2:: Erfindungsgemäße Ausbildung der Schweißnahtverbindung in Schnittdarstellung

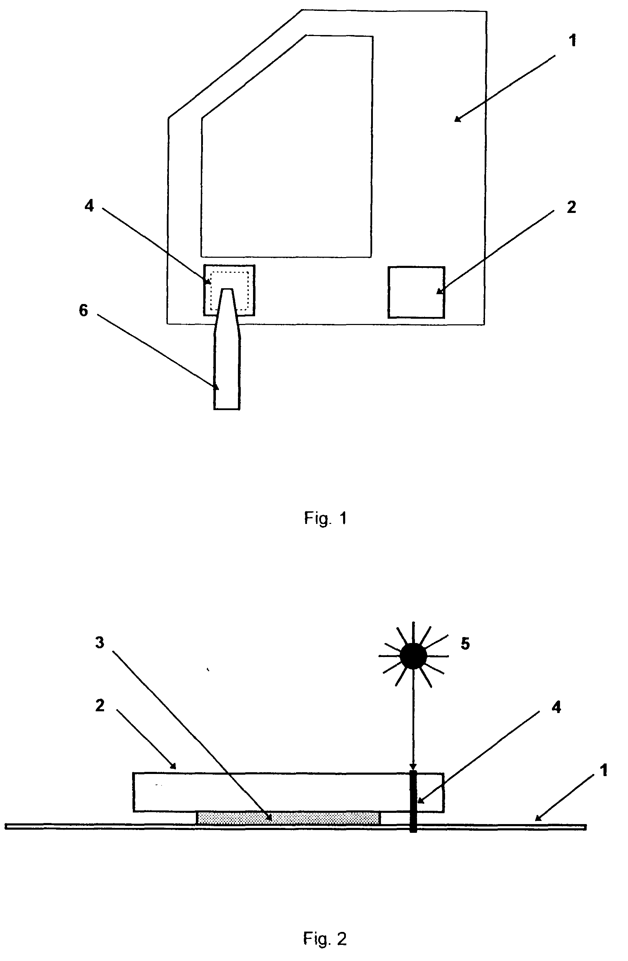

Fig. 1 zeigt das Beispiel einer Tür von einem Fahrzeug, bestehend aus dünnem Blech 1, auf dem in dem Bereich der Scharniere ein dickeres Deckblech 2 auf herkömmlicher Weise aufgeschweißt ist.
Das Deckblech 2 wird durch eine Haltevorrichtung 6 festgehalten.
Gemäß einer solchen Ausgestaltung schneidet der Laserstrahl 5 die Haltevorrichtung 6, so daß ein Umsetzen der Haltevorrichtung 6 zur Erzielung einer geschlossenen Schweißnahtkontur notwendig ist.

Fig. 2 zeigt den Bereich der Türscharniere einer Seitentür eines Fahrzeuges in Schnittdarstellung. Verfahrensgemäß wird zwischen Grundblech 1 und Deckblech 2 wird ein trägerfreier Hochleistungsklebestreifen 3 eingebracht und danach Grundblech 1 und Deckblech 2 durch Anpressen miteinander verklebt, wodurch eine zusätzliche Halterung des Deckbleches 2 für die Dauer des Schweißvorganges nicht mehr notwendig ist.
Durch das Einbringen des Hochleistungsklebers mit einer definierten Dicke, wird ein gleichmäßiger Abstand zwischen Grundblech 1 und Deckblech 2 garantiert, wodurch eine stabile reproduzierbare Schweißnahtgeometrie erreicht wird.
Die äußere Kontur des Hochleistungsklebestreifens 3 ist dabei so bemessen, daß die Breite des kleberfreien Bereiches mindestens gleich der Breite der Wärmeeinflußzone im Schweißnahtbereich ist, so daß eine Beeinträchtigung der Schweißnaht durch verbrannten Kleber nicht möglich ist.
Der Bereich der Schweißnaht 4, die von dem Laserstrahl 5 geschmolzen ist somit frei von Kleber.
Bei feuerverzinktem Material mit Schichtdicken um jeweils 20 bis 30 µm, gewährleistet ein Spalt von 0.2 mm das seitliche Entweichen des Zinkdampfes.

Die Dicke des Hochleistungsklebestreifens 3 kann bei einer höheren aktuellen Schichtdicke der metallischen Schutzschichten auf den mitander zu verbindenden Blechen nach oben verändert werden, um ein sicheres Entweichen des Beschichtungsdampfes zu gewährleisten. Ein Unterschreiten des Spaltes bei dem Verschweißen von unbeschichteten Material ist möglich, wozu ein entsprechend dünnerer Hochleistungsklebestreifen 3 verwendet wird.

### Aufstellung der verwendeten Bezugszeichen

- 1: Grundblech
- 2: Deckblech
- 3: Hochleistungsklebestreifen
- 4: Schweißnaht
- 5: Laserstrahl
- 6: Haltevorrichtung

## Patentansprüche

1. Verfahren zum Verbinden von Blechteilen mit Überlappstoß insbesondere von metallisch beschichteten Blechteilen für Kraftfahrzeugkarosserien, dadurch gekennzeichnet, daß zwischen einem Grundblech (1) und einem mit dem Grundblech (1) zu verbindenden Deckblech (2) ein trägerfreier Hochleistungsklebestreifen (3) eingelegt wird und danach das Grundblech (1) mit dem Deckblech (2) unter Druck miteinander verklebt werden, wobei der Hochleistungklebestreifen (3) so bemessen ist, daß seine äußere Kontur kleiner als die äußere Kontur des Deckbleches (2) ist und die so in ihrer Lage fixierten Blechteile nachfolgend durch eine in der äußeren klebestreifenfreien Zone des Deckbleches (2) verlaufende Laserschweißnaht (4) miteinander verbunden werden.

2. Verfahren nach Anspruch 1, dadurch gekennzeichnet, daß der trägerfreie Hochleistungsklebestreifen beim Verbinden von metallisch beschichteten Blechteilen mindestens eine Dicke von 0.2 mm aufweist.

3. Verfahren nach Anspruch 1 und 2, dadurch gekennzeichnet, daß die in der klebestreifenfreien Zone der miteinander zu verbindenden Blechteile verlaufende Laserschweißnaht (4) eine geschlossene Kontur aufweist.
